# EUROPÄISCHE PATENTSCHRIFT

(11) **EP 2 170 675 B1**
(45) Veröffentlichungstag und Bekanntmachung des Hinweises auf die Patenterteilung: **13.10.2010**
(21) Anmeldenummer: 08759269.7
(22) Anmeldetag: 17.06.2008
(51) Int. Cl.: B62B 13/12, B62B 17/08

(54) **RODEL**
SLED
LUGE

(30) Priorität: 26.06.2007 EP 07012494
(43) Veröffentlichungstag der Anmeldung: 07.04.2010
(73) Patentinhaber: Flamm, Rainer, 71069 Sindelfingen (DE); Carthy-Rosin, Marianne, 71067 Sindelfingen (DE)
(72) Erfinder: Flamm, Rainer, 71069 Sindelfingen (DE); Carthy-Rosin, Marianne, 71067 Sindelfingen (DE)
(74) Vertreter: von Hellfeld, Axel
(86) Internationale Anmeldenummer: PCT/EP2008/004874
(87) Internationale Veröffentlichungsnummer: WO 2009/000449

(56) Entgegenhaltungen:
- DE-A1- 2 923 595
- US-A- 1 362 902

## Beschreibung

Die Erfindung betrifft einen Rodel, also ein Gerät, mit dem ein Mensch auf z.B. einer schnee- oder eisbedeckten Bahn bergab gleiten kann. Solche Geräte werden auch als Rodelschlitten oder Schlitten bezeichnet.

Der Stand der Technik kennt Rodel in unterschiedlichsten Ausgestaltungen. Beim klassischen Rodelgerät, welches üblicherweise weitgehend aus Holz hergestellt ist, erstrecken sich zwei vorne hochgekrümmte Träger parallel in Fahrtrichtung. Bodenseitig sind die Träger üblicherweise mit Metallkufen beschlagen. Auf jedem der Träger stehen zwei oder mehr vertikale Streben, die einen den Freiraum zwischen den Trägern überbrückenden Sitz abstützen. Ausgehend von diesem jahrhundertealten Grundmodell sind unterschiedliche Abwandlungen vorgenommen worden, insbesondere mit Lenkeinrichtungen oder dergleichen.

Die DE 29 23 595, welche alle Merkmale des Oberbegriffs des Anspruchs 1 enthält, zeigt einen Rodel mit einem Sitz, der von elastischen Bändern gebildet ist, welche um einen vorderen Querholm und einen hinteren Querholm gezogen sind.

Die US 1,362,902 zeigt einen Schlitten ohne Krümmung im hinteren Bereich der Träger. Ein Sitz kann beim Zusammenklappen des Schlittens auf den Längsholmen verschoben werden. Jedoch hat diese Verschiebung des Sitzes keine Beziehung zu den Gleit- und Lenkeigenschaften des Schlittens.

Der Erfindung liegt die Aufgabe zugrunde, ein neuartiges Rodelgerät bereitzustellen, das mit geringem Materialaufwand gute Gleiteigenschaften, eine hohe Stabilität und eine gute Lenkbarkeit aufweist.

Hierzu lehrt die Erfindung einen Rodel mit zwei Gleit- oder Rollmittel aufweisenden Trägern, die in Fahrtrichtung vorne einen ersten gekrümmten Bereich, in Fahrtrichtung hinten einen zweiten gekrümmten Bereich und dazwischen einen langgestreckten mittleren Bereich aufweisen, und mit einem Sitz, der über Verstrebungen über dem mittleren Bereich der Träger gehalten ist, wobei die Verstrebungen vorne und hinten an den gekrümmten Bereichen der Träger angreifen, wobei der Sitz in Längsrichtung des Rodels verschiebbar gelagert ist.

Bevorzugt greifen die Verstrebungen vorne und hinten an den gekrümmten Bereichen der Träger an.

Damit stellt die Erfindung ein Rodelgerät bereit, das vorne und hinten vom Boden weggekrümmte Gleit- oder Rollmittel tragende Träger aufweist. Dies hat zunächst den Vorteil, dass das Rodelgerät auch in rückwärtiger Richtung gleiten kann, ohne dass sich die Kufen in Schnee oder Eis verhaken. Rodler, die in einer Kurve hängenbleiben und sich neu positionieren müssen, wissen dies zu schätzen.

Erfindungsgemäß erfolgt die Abstützung des Sitzes über den Trägern so, dass zumindest ein Großteil des Gewichtes der rodelnden Person in die vorderen und hinteren gekrümmten Bereiche der Träger eingeleitet wird. Dies hat zunächst eine vorteilhafte elastische Lagerung des Sitzes zur Folge. Weiterhin kann der Rodler bei dieser Konstruktion durch Gewichtsverlagerung in einfacher Weise den Rodel lenken.

Der erfindungsgemäße Rodel ermöglicht es, durch Gewichtsverlagerung die Fahreigenschaften des Rodels zu ändern. Zum Beispiel kann der Rodler sein Gewicht zum einen weitestgehend auf den Sitz verlagern und zum anderen kann er den Sitz entlasten und statt dessen sein Gewicht durch Abstützung der Füße am vorderen gekrümmten Bereich und Abstützung der Schultern auf dem hinteren gekrümmten Bereich verlagern. Bei Konzentration des Körpergewichts auf den Sitz werden die Krümmungsradien der gekrümmten Bereiche bei entsprechender Ausgestaltung und Bemessung der Träger verringert. Dies wirkt wiederum auf den langgestreckten mittleren Bereich der Träger und verkürzt die Kontaktfläche zwischen diesem Bereich und der Rodelbahnoberfläche, sodass der Rodel stärker auf Lenkeinwirkungen reagiert.

Verlagert der Rodler hingegen sein Gewicht durch Abstützung mit den Füßen auf den vorderen gekrümmten Bereich und Abstützung im Schulterbereich auf den hinteren gekrümmten Bereich, verlängert sich bei geeigneter Ausgestaltung der Träger und deren Elastizität die Kontaktstrecke zwischen den mittleren Bereichen der Träger und der Rodelbahnoberfläche, sodass die Richtungsstabilität des Schlittens verstärkt wird.

Zur optimalen Anpassung eines Rodels an das Gewicht und die Größe eines Rodlers können die Angriffspunkte der durch das Gewicht des Rodlers verursachten Kräfte an den gekrümmten Bereichen, also die Zugkräfte, mit denen die Krümmungsradien der gekrümmten Bereiche beeinflusst werden, variabel einstellbar eingerichtet werden.

Eine bevorzugte Ausgestaltung der Erfindung sieht zumindest zwei Querstreben vor, über welche die Träger indirekt miteinander verbunden sind. Diese Querstreben erstrecken sich somit quer zur Fahrtrichtung. Sie verbinden die zur vertikalen Mittelebene symmetrischen linken und rechten Bauteile des Rodels und ermöglichen einen einfachen Auseinanderbau für Transportzwecke. Die Querstreben können zum Beispiel über Verschraubungen mit den Trägern lösbar verbunden sein.

Bevorzugt befindet sich eine Querstrebe in Fahrtrichtung vor dem Sitz, während sich hinter dem Sitz eine oder bevorzugt zwei Querstreben befinden. Letzteres fördert die Stabilität des Rodels und ermöglicht somit die Verwendung leichter und schlanker Bauteile.

Wenn hier von "vorne", "hinten", "oben", "unten", "vertikal" und "horizontal" die Rede ist, beziehen sich diese Eigenschaften in sinnfälliger Weise auf den üblichen Einsatz des Rodels.

Eine andere bevorzugte Ausgestaltung des Rodels sieht vor, dass die Verstrebungen mit Verstrebungsteilen auch am langgestreckten mittleren Bereich der Träger angreifen.

Die Verstrebungen greifen so an den gekrümmten Bereichen der Träger an, dass bei Belastung des Sitzes vorne und/oder hinten die Krümmungsradien der gekrümmten Bereiche der Träger kleiner werden, d.h. die Bereiche werden stärker gebogen (gekrümmt). Bevorzugt erfolgt diese Reduzierung des Krümmungsradius an den hinteren gekrümmten Bereichen der Träger.

Eine andere bevorzugte Ausgestaltung des Rodels sieht auf beiden Seiten des Rodels Längsholme vor, die den Sitz zwischen sich tragen. Dabei ist der Sitz auf den Längsholmen gemäß einer weiteren bevorzugten Ausgestaltung in Längsrichtung des Rodels verschiebbar.

Bei einer anderen Ausgestaltung des erfindungsgemäßen Rodels können, insbesondere im hinteren Bereich, die genannten Verstrebungen mehr oder weniger weggelassen werden und Längsholme, welche den Sitz abstützen, können direkt oder indirekt so in Abhängigkeit von der Gewichtsbelastung des Sitzes auf insbesondere den hinteren gekrümmten Bereich der Träger einwirken, dass in Abhängigkeit vom Gewicht der Krümmungsradius des gekrümmten Bereiches verändert wird.

Eine andere bevorzugte Ausgestaltung der Erfindung sieht vor, dass die genannten hinteren gekrümmten Bereiche der Träger einen gekrümmten Bogen bilden, der sich über einen Winkel erstreckt, der größer ist als 120° (also fast einen Halbkreis bildet), insbesondere kann sich der hintere gekrümmte Bereich der Träger über einen Winkel im Bereich von 200 bis 260° erstrecken. Die Krümmung muss dabei nicht notwendig exakt einer Kreisform folgen, vielmehr kann sich der Krümmungsradius entlang der Krümmung ändern. Gemäß einer anderen Variante der Erfindung erstreckt sich der hintere gekrümmte Bereich der Träger über einen Winkel im Bereich vom 120° bis 170°, bildet also ein Kreissegment etwas kleiner als ein Halbkreis. Die Begriffe "Kreissegment" und "Halbkreis" bedeuten auch hier, dass die Ausführung sich nicht notwendig exakt auf eine Kreisform beziehen muss, sondern dass Abweichungen von der genauen Kreisform zugelassen sind. Die genannten Winkelangaben sind also als Bogenmaß zu verstehen.

Eine andere bevorzugte Ausgestaltung des Rodels sieht Bremsbacken vor, die entlang der hinteren gekrümmten Bereiche der Träger verschiebbar sind, sodass sie zum Bremsen in Bodenkontakt bringbar sind.

Eine andere bevorzugte Ausgestaltung des Rodels sieht Verstrebungen in Form von Längsholmen vor, die sich direkt und geradlinig von den vorderen gekrümmten Bereichen der Träger zu den hinteren gekrümmten Bereichen der Träger erstrecken. Diese Längsholme tragen auch den entlang des Längsholme verstellbar abgestützten Sitz.

Bei der vorstehend genannten Variante der Erfindung bestehen die konstruktiven Bauteile des Rodels bevorzugt nur aus den genannten Trägern, den genannten Längsholmen und gegebenenfalls Querstreben zur Stabilisierung, welche die Träger auf Abstand halten.

Bei dieser Variante der Erfindung sind die genannten Längsholme bevorzugt nach vorne abwärts geneigt, und zwar mit einem Winkel gegen die horizontale (deren Richtung der Richtung der geradlinigen mittleren Bereiche der Träger entspricht) im Bereich zwischen 5 und 15°, bevorzugt im Bereich zwischen 8 und 12° und weiter bevorzugt etwa mit einem Winkel von 10°.

Bevorzugt sind die Längsholme vom Benutzer wahlweise in ihrer Länge einstellbar, wobei in Abhängigkeit von der eingestellten Länge die Krümmungsradien im vorderen Bereich der Träger und ganz besonders im hinteren Bereich der Träger veränderbar sind und auch die Spannung, unter welcher der Träger durch die Längsholme steht, einstellbar ist. Die Längenverstellung der Längsholme erfolgt bevorzugt derart, dass die Längsholme mit Gewindeanordnungen versehen sind, sodass durch Drehung in der Art einer Gewindespindel die Länge der Längsholme veränderbar ist. In Abwandlung der Ausführung mit Gewinde kann auch die Längenverstellung der Längsholme durch einen Kniehebel im Längsholm bewirkt werden.

Nachfolgend wird die Erfindung anhand von Ausführungsbeispielen zeigenden Figuren mit weiteren Einzelheiten erläutert. Es zeigt bzw. zeigen:
- Figur 1: in perspektivischer Darstellung einen Rodel;
- Figur 2: den Rodel gemäß Figur 1 in Seitenansicht;
- Figur 3: den Rodel gemäß den Figuren 1 und 2 mit einer Sitzstellung, die be- sonders für Rodel-Anfänger geeignet ist;
- Figur 4: den Rodel mit einer Sitzstellung, die für sportlichere Fahrer geeignet ist;
- Figur 5: den Rodel in einer Sitzstellung für sportliche und geübte Rodler;
- Figur 6: eine Ausrüstung der Träger des Rodels mit für Schnee und Eis geeigne- ten Kufen;
- Figur 7: eine Ausgestaltung der Träger des Rodels mit für Schnee oder Sand geeigneten Kufen;
- Figur 8: eine Ausgestaltung der Träger des Rodels mit Rädern;
- Figur 9: Einzelheiten einer Querstrebe und der zugehörigen Befestigungsschrau- be;
- Figur 10: den Rodel mit demontierten Querstreben in zusammengelegtem Zu- stand;
- Figur 11: eine Einzelheit der Befestigung des Sitzes an den Längsholmen;
- Figuren 12, 13, 14: verschiedene Stellungen eines Bremsbackens;
- Figur 15: die einzelnen Bauteile eines Rodels in Explosionsdarstellung;
- Figur 16: eine Ansicht des Rodels von hinten;
- Figur 17: ein anderes Ausführungsbeispiel eines Rodels in Seitenansicht;
- Figur 18: eine Frontansicht des Rodels gemäß Figur 17; und
- Figur 19: den Rodel gemäß den Ausführungsbeispielen nach den Figuren 17 und 18 in perspektivischer Darstellung.

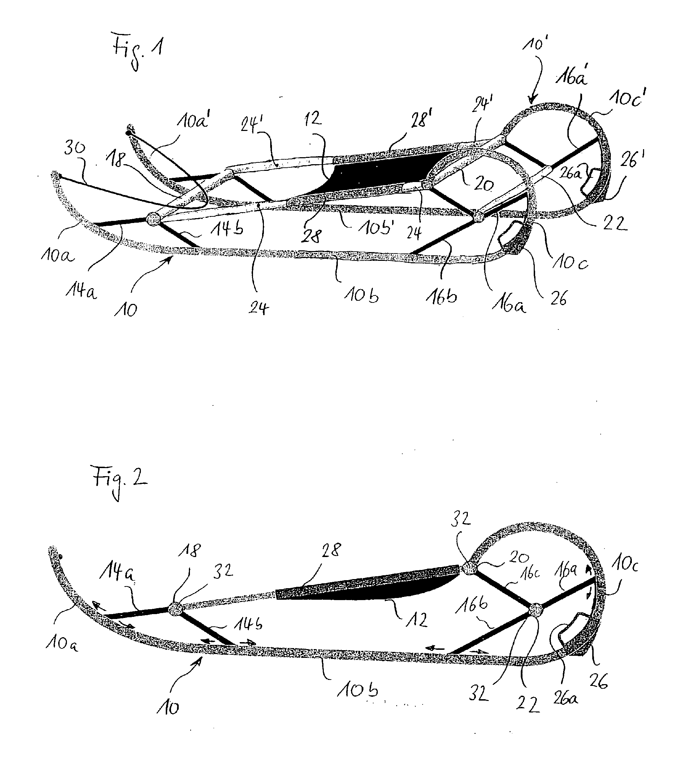

Gemäß Figur 1 hat ein Rodel beidseitig und außenseitig zwei Gleit- oder Rollmittel tragende Träger 10, 10'. Die vorgesehene Fahrtrichtung des Rodels ist in den Figuren nach links.

Die Träger 10, 10' können in drei Bereiche unterteilt werden: In einen ersten gekrümmten Bereich 10a, 10a' in Fahrtrichtung vorne; einen zweiten gekrümmten Bereich 10c, 10c' hinten und einen dazwischenliegenden mittleren langgestreckten Bereich 10b, 10b'. Aufgrund des hinteren gekrümmten Bereiches 10c, 10c' kann der Rodel auch rückwärts fahren, ohne dass seine Kufen dazu neigen, sich in Schnee oder Eis zu verhaken.

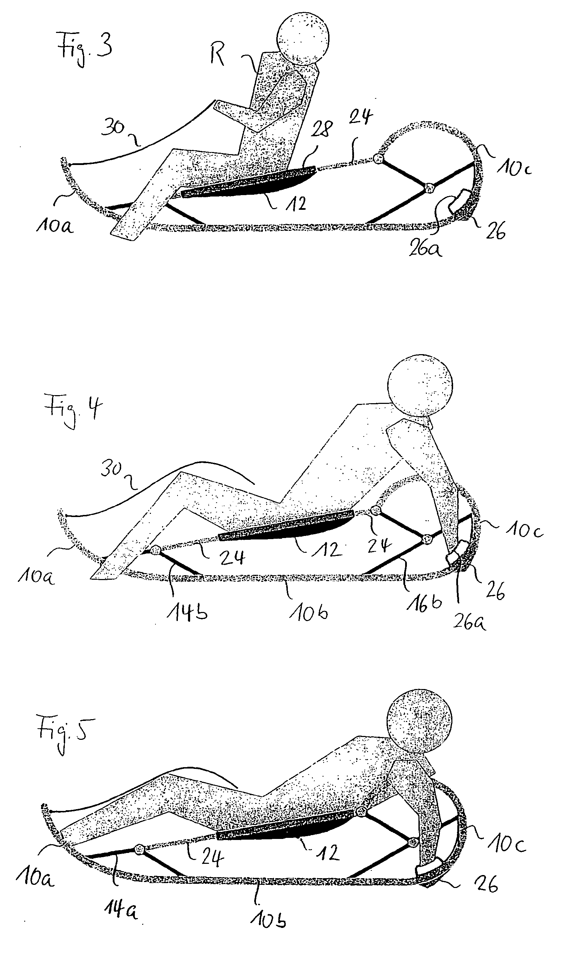

Der Rodler sitzt auf einem Sitz 12 (vgl. Figuren 3 bis 5).

Über vordere Verstrebungen 14a, 14b und hintere Verstrebungen 16a, 16b, 16c ist der Sitz 12 indirekt über den Trägern 10, 10' abgestützt. Dabei liegen die genannten Verstrebungen auf beiden Seiten des Rodels jeweils in Ebenen, die sich in Längsrichtung des Rodels erstrecken, also in der vorgesehenen Fahrtrichtung.

Über Querstreben 18, 20, 22 sind die beiden Seiten des Rodels miteinander verbunden. Die Querstreben 18, 20, 22 sind in weiter unten beschriebener Weise demontierbar, sodass der Schlitten in einfacher Weise raumsparend verstaubar ist.

Auf beiden Seiten des Rodels befinden sich Längsholme 24, 24', zwischen denen der Sitz 12 aufgespannt ist. Hierzu umgreifen Manschetten 28, 28' die Längsholme 24, 24' und die Manschetten tragen die eigentliche Auflagefläche des Sitzes 12.

Bremsbacken 26, 26' sind jeweils an den hinteren gekrümmten Bereichen 10c, 10c' in weiter unten näher beschriebener Weise geführt.

Vorne ist der Rodel in üblicher Weise mit einer Zugleine 30 versehen. Es ist auch möglich, den Rodel mit einer Öse oder einem Haken zu versehen, insbesondere derart, dass der Rodel in einfacher Weise an einem Rodellift (oder auch einem Skilift) befestigbar ist.

Figur 2 zeigt eine Seitenansicht des Rodels gemäß Figur 1. Der Rodel ist insgesamt spiegelsymmetrisch in Bezug auf die vertikale Mittelebene.

Die Figuren 3, 4 und 5 zeigen unterschiedliche Einstellungen des Sitzes 12, je nach der vom Benutzer bevorzugten Steuerungstechnik.

Mittels der Manschetten 28 ist der Sitz 24 auf den Längsholmen 24 in Längsrichtung verschiebbar. In der in Figur 3 gezeigten Stellung befindet sich der Sitz 12 weit vorne auf dem Rodel. Diese Stellung ist besonders geeignet für Kinder und Rodel-Anfänger, die relativ unsicher und langsam rodeln.

Figur 4 zeigt eine mittlere Stellung des Sitzes 12 auf den Holmen 24, die für Rodler mit einiger Erfahrung geeignet ist. Wie Figur 4 zeigt, kann in dieser Stellung der Rodler mit den Händen Griffe 26a der Bremsbacken 26 erfassen und so die Bremsbacken in weiter unten näher beschriebener Weise bei Bedarf nach unten in Bodenkontakt drücken.

Figur 5 zeigt den Sitz 12 in einer in Bezug auf die Fahrtrichtung maximal nach hinten gerückten Position auf den Holmen 24. Diese Sitzposition ist für geübte Sportrodler optimal, die auf hohe Geschwindigkeiten Wert legen. Dabei ist der Rodel gleichwohl gut lenkbar.

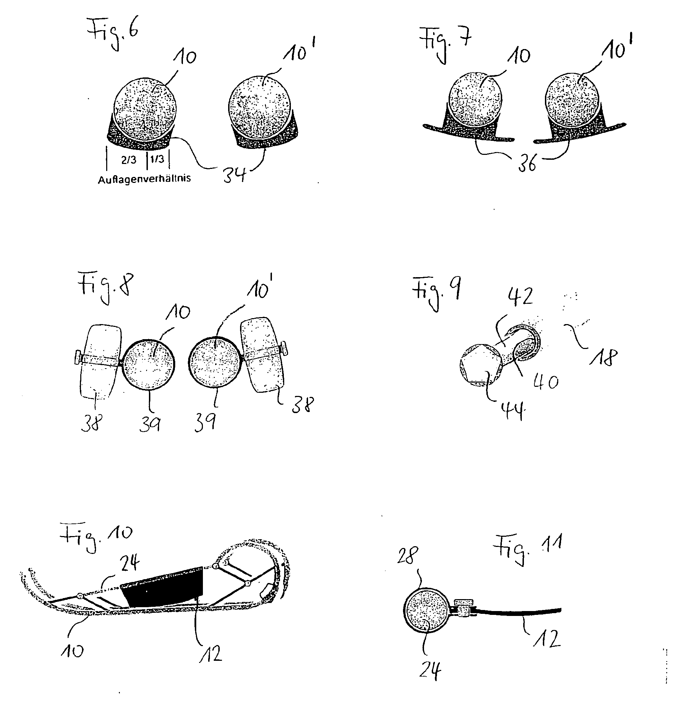

Die Figuren 6 bis 8 zeigen verschiedene Möglichkeiten, einen Rodel gemäß den Figuren 1 bis 5 in Abhängigkeit von den Bodenverhältnissen auszurüsten.

Für den hauptsächlich vorgesehenen Einsatz auf Schnee/Eis können Kufen 34 unter den Trägern 10, 10' montiert werden. Dabei erstrecken sich die Kufen 34 über den gesamten mittleren Bereich 10b der Träger 10 und auch deutlich bis in die gekrümmten Bereiche 10a bzw. 10c. Die Kufen 34 werden mit Schrauben (nicht gezeigt) an den Trägern befestigt. Wie Figur 6 zeigt, werden die Kufen 34 nicht vollständig symmetrisch in Bezug auf eine Vertikalebene montiert, sondern so, dass bei Geradeausfahrt auf ebener Fläche die Kontaktfläche im wesentlichen innenseitig in Bezug auf eine mittig durch den Träger 10 gehende Vertikalebene liegt, wie Figur 6 zeigt. Es ist also die Innenauflagefläche der Kufen 34 größer als die Außenauflagefläche. Dies bedeutet, dass bei Geradeausfahrt des Rodels im wesentlichen die innenseitige Auflagefläche (in Figur 6 die mit "1/3" bezeichnete Teilfläche der Kufe) zum Einsatz kommt, d.h. in Kontakt steht mit der Schnee- oder Eisbahn. Dies fördert die Stabilität des Geradeauslaufs. Drückt der Rodler hingegen den Rodel in eine Kurve, kommen auch eher außenseitige Bereiche der Kufe (in Figur 6 die mit "2/3" bezeichneten Bereiche) in Kontakt mit der Schnee- bzw. Eisbahn, was die Kurvenstabilität und Lenkbarkeit des Schlittens fördert. Beim Ausführungsbeispiel gemäß Figur 6 beträgt das Auflagenverhältnis, in dem die Gesamtfläche der Kufe aufgeteilt ist, 1:2. Dies fördert die Fahrstabilität des Rodels und ermöglicht zugleich eine stabile Kurvenfahrt. Die Kufen können auch direkt in die Träger integriert sein bei geeigneter Wahl des Trägermaterials. Die Träger sind bevorzugt einstückig, d.h. alle Bereiche 10a, 10b, 10c sind aus einem Stück des gewählten Materials. Als Material für die Träger und Verstrebungen kommen geeignete Hölzer, Metalle, oder sogar geeignete faserverstärkte Kunststoffe oder dergleichen in Betracht. Bevorzugt wird für die Träger und auch andere Bauteile des Rodels Aluminium-Hohlrohr verwendet, bevorzugt mit kreisrundem Querschnitt.

Figur 7 zeigt analog Figur 6 die Montage von Kufen 36, die besonders geeignet sind für das Rodeln auf nicht-planiertem Schnee oder auch auf Sand oder dergleichen. Ansonsten gilt hinsichtlich der Montage der Kufen 36 analog das Gleiche wie anhand der Kufen 34 gemäß Figur 6 beschrieben ist.

Figur 8 zeigt eine Ausrüstung des Rodels mit Rädern 38. Die Räder 38 werden mit Manschetten 39 an den Trägern 10, 10' montiert. Dabei befinden sich auf jeder Seite des Rodels mehrere Räder, zum Beispie 6 Räder je Seite, die individuell entsprechend den Wünschen des Benutzers in ihrem Winkel in Bezug auf die Vertikale einstellbar sind indem die Manschette 39 in die gewünschte Position gedreht und dann befestigt wird. Einzelheiten der Befestigung mit Schrauben und anderen Klemmmitteln stehen ohne weiteres zur Verfügung und sind hier nicht näher dargestellt.

Figur 9 zeigt Einzelheiten der Gestaltung der Querstreben 18, 20, 22. Eine Querstrebe ist als Hohlrohr ausgebildet und wird mit einem Schraubenbolzen 42 und einer Schraube 44, zum Beispiel einer Rändelschraube, an Schlitten montiert. Eine elastische Einlage 40 zwischen dem zentralen Schraubenbolzen 42 und der rohrförmigen Querstrebe fördert die elastischen Eigenschaften und die Lenkbarkeit des Rodels.

Figur 10 zeigt den Rodel bei entfernten Querstreben 18, 20, 22, sodass aufgrund der Flexibilität des Sitzes 12 die beiden Seiten des Rodels in direkte Anlage gebracht werden können, sodass der Rodel platzsparend transportiert und verstaut werden kann.

Figur 11 zeigt Einzelheiten der Befestigung des Sitzes 12 an den Längsholmen 24. Mittels einer Manschette 28 kann der Sitz 12 in Längsrichtung des Rodels an beliebiger Stelle auf den Holmen befestigt werden (vgl. Figuren 3, 4 und 5). Für die Befestigung der Manschette mittels Schrauben oder dergleichen stehen unterschiedliche Techniken zur Verfügung, die hier nicht näher beschrieben werden müssen.

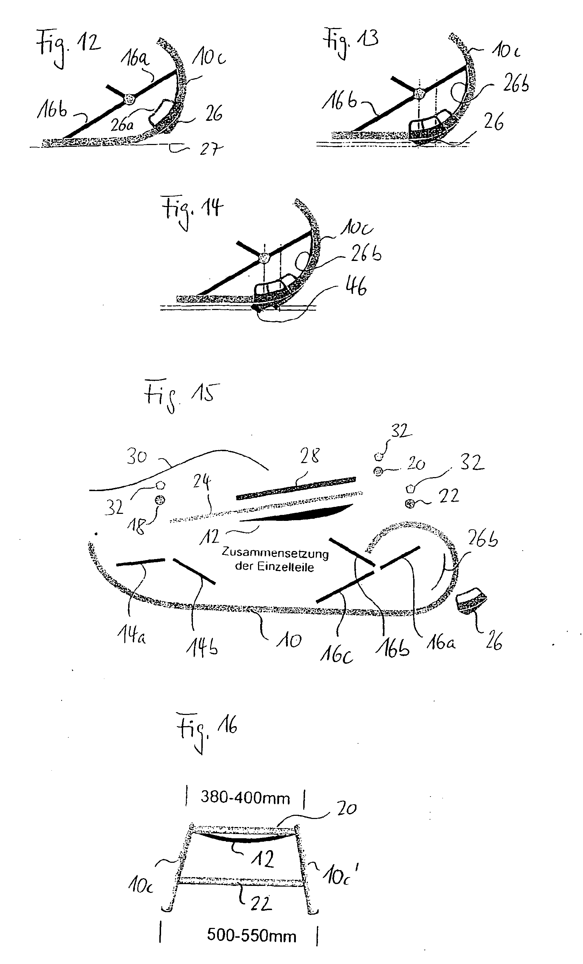

Die Figuren 12, 13 und 14 zeigen die Betätigung der Bremsbacken 26. In der Stellung gemäß Figur 12 ist die Bremse nicht betätigt und der Bremsbacken 26 hat Abstand von der Oberfläche 27 der Rodelbahn. Will der Benutzer mit einem oder mit zwei Bremsbacken bremsen bzw. lenken, ergreift der gemäß den Figuren 4, 5 den Griff 26a des gewünschten Bremsbackens und drückt den Bremsbacken gegen die Kraft einer Zug-Feder 26b nach unten in Kontakt mit der Oberfläche zum Beispiel der Rodelbahn. Dadurch kann in sehr gezielter Weise eine Brems- und/oder Lenkwirkung erzielt werden. Die Zugeinrichtung 26b, mit der die Bremsbacken nach oben in ihre Ruhestellung vorgespannt sind, wird vorzugsweise so am oder im Träger angebracht, dass sie keine Verletzungsgefahr bewirkt, also insbesondere nicht vom Träger vorsteht.

Figur 14 zeigt eine besondere Auflage 46 im Reibbereich des Bremsbackens 26 bei Einsatz auf zum Beispiel festem Untergrund, wie Asphalt oder dergleichen (zum Beispiel bei der Ausführungsform mit Rädern gemäß Figur 8).

Die Bremsbacken 26, 26' können zum Beispiel mit die gekrümmten Bereiche 10c, 10c' übergreifenden Manschetten auf diesen gekrümmten Bereichen geführt werden. In die nicht-bremsende Ruhestellung werden dabei die Bremsbacken bevorzugt vorgespannt, zum Beispiel mittels einer über den Bremsbacken angeordneten Feder oder dergleichen.

Figur 15 zeigt schematisch den Rodel in auseinandergenommenem Zustand mit seinen einzelnen Bauteilen etwa an den Stellen ihres Einsatzes im fertig montierten Rodel.

Figur 16 zeigt den Rodel gemäß den Figuren 1 bis 15 von hinten mit der leichten Schrägstellung der Träger 10c, 10c'.

In Abwandlung des vorstehend beschriebenen Ausführungsbeispieles kann insbesondere im hinteren Bereich des Rodels auf die dargestellten Verstrebungen 16, 16' ganz oder teilweise verzichtet werden. Dabei stützen sich die den Sitz tragenden Längsholme direkt oder indirekt am hinteren gekrümmten Bereich des Trägers ab, bevorzugt jeweils am zugeordneten freien Ende des gekrümmten Bereichs des Trägers.

Die Verstrebungskomponenten 14a, 14b, 16a, 16b können gemäß einer bevorzugten Abwandlung des vorstehend beschriebenen Ausführungsbeispieles auch so gestaltet werden, dass ihre Angriffspunkte an den Trägern variabel einstellbar (verschiebbar) sind. Dies ist in Figur 2 mit Pfeilen direkt an den genannten Angriffspunkten schematisch angedeutet. Damit lassen sich die elastischen und damit auch die fahrtechnischen, insbesondere lenktechnischen Eigenschaften des Rodels je nach den Vorlieben des Benutzers einstellen.

Gemäß den in Figur 2 schematisch an den Angriffspunkten angedeuteten Pfeile können also die Verbindungsstellen zwischen den genannten Verstrebungen und den Trägern zur Einstellung der elastischen Eigenschaften und der Lenkeigenschaften des Schlittens variiert werden.

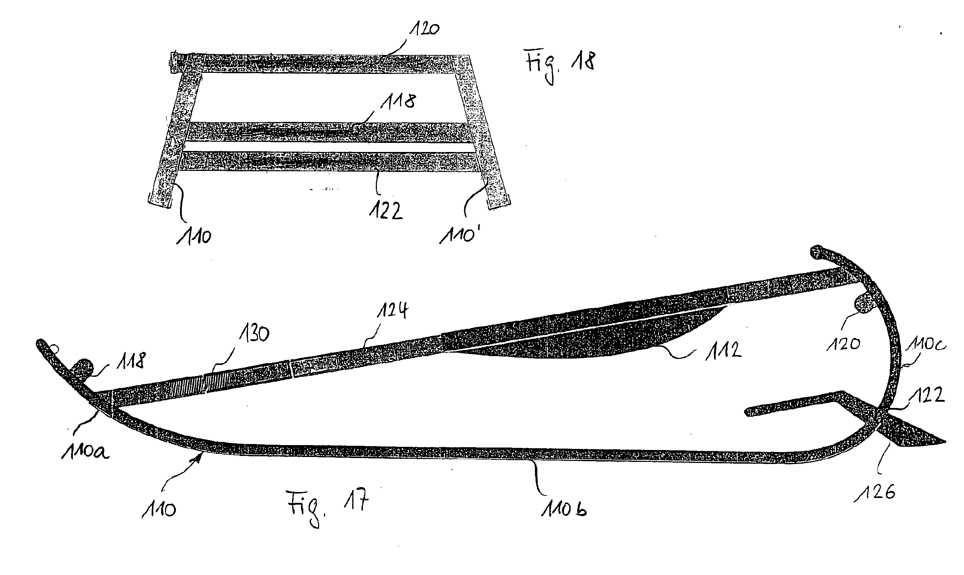

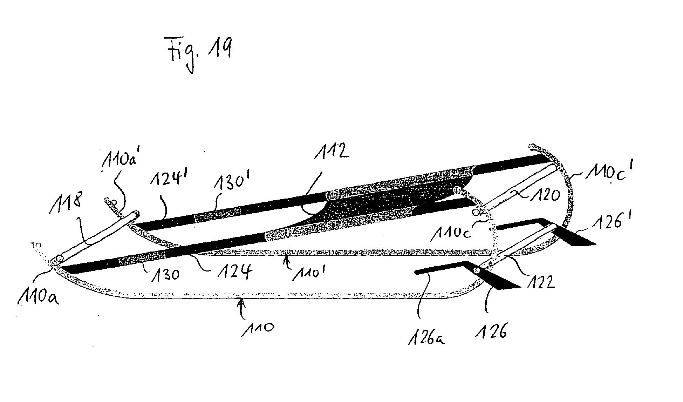

Die Figuren 17, 18 und 19 zeigen ein anderes Ausführungsbeispiel eines Rodels, wobei einander entsprechende oder funktionsähnliche Bauteile im Vergleich zum Ausführungsbeispiel gemäß den anderen Figuren mit einem um 100 vergrößerten Bezugszeichen versehen sind, sodass bezüglich dieser Bauteile weitgehend auf die obige Beschreibung zurückgegriffen werden kann.

Beim Ausführungsbeispiel gemäß den Figuren 17, 18 und 19 erstrecken sich die Verstrebungen 124, 124' in Form von Längsholmen direkt von den vorderen gekrümmten Bereichen 110a, 110a' zu den hinteren gekrümmten Bereichen 110c, 110c' der Träger 110, 110'. Die vorderen gekrümmten Bereiche 110a, 110a' haben einen gekrümmten Bereich, der sich über einen Winkel von etwa 30° erstreckt. Der genannte Winkel kann im Bereich von 15 bis 45° liegen. Die hinteren gekrümmten Bereiche 110c, 110c' erstrecken sich über größere Winkelbereiche als die vorderen gekrümmten Bereiche. Beim dargestellten Ausführungsbeispiel ist der Winkelbereich, über den sich die hinteren gekrümmten Abschnitte der Träger erstrecken etwa 170°. Möglich sind Winkelbereiche von insbesondere 120 bis 180°.

Die Neigung der geradlinigen Längsholme 124, 124' ist oben beschrieben.

Die Länge der Längsholme 124, 124' ist über Gewinde 130, 130' einstellbar, zum Beispiel derart, dass ein Teil des Längsholms ein Innengewinde hat, in das eine Verlängerung des Längsholmes mit einem Außengewinde eingreift, sodass ein Benutzer durch Drehung der Gewindeteile die Länge der Längsholme 124, 124' einstellen und damit auch die Krümmung der Träger leicht einstellen kann. Hierzu bestehen die Längsholme 124, 124' bevorzugt aus einer geeigneten Metallrohrkonstruktion.

In Abwandlung des vorstehend beschriebenen Ausführungsbeispiels kann die Längenverstellung der Längsholme auch über sog. Kniehebel erfolgen, die entweder ausschließlich für die Längenverstellung oder auch in Kombination mit den beschriebenen Gewinden einsetzbar sind.

Querstreben 118, 120, 122 stabilisieren den Rodel. Die Querstreben bestehen bevorzugt ebenfalls aus Metallrohren und sind, ähnlich dem oben beschriebenen Ausführungsbeispiel (Fig. 15) leicht demontierbar, sodass der Rodel insgesamt einfach auseinanderbaubar und zusammensetzbar ist. An einer der Querstreben 122 sind Bremsen 126, 126' angelenkt. Die Bremsen 126, 126' sind unabhängig voneinander betätigbar durch Hochziehen am Handgriff 126a.

Die Querstreben können zum Beispiel über Schraubenbolzen/Gewinde mit den Trägern Iösbar verbunden werden.

Der Sitz 112 ist direkt auf den Längsholmen 124, 124' montiert und darauf in Längsrichtung verstellbar positionierbar, ähnlich dem oben beschriebenen Ausführungsbeispiel.

## Patentansprüche

1. Rodel mit zwei Gleit- oder Rollmittel aufweisenden Trägern (10; 110, 110'), die in Fahrtrichtung vorne einen ersten gekrümmten Bereich (10a, 110a), in Fahrtrichtung hinten einen zweiten gekrümmten Bereich (10c, 110c) und dazwischen einen langgestreckten mittleren Bereich (10b, 110b) aufweisen, und mit einem Sitz (12, 112), der über Verstrebungen über dem mittleren Bereich (10b, 110b) der Träger gehalten ist, wobei die Verstrebungen (24, 24', 124, 124') vorne und hinten an den gekrümmten Bereichen der Träger angreifen, **dadurch gekennzeichnet, dass** der Sitz (12) in Längsrichtung des Rodels verschiebbar gelagert ist.

2. Rodel nach Anspruch 1, **dadurch gekennzeichnet, dass** der Sitz auf Verstrebungen in Form von Längsholmen (24, 24', 124, 124'), die auf beiden Seiten des Rodels sich in dessen Längsrichtung erstrecken, verschiebbar gelagert ist.

3. Rodel nach einem der Ansprüche 1 oder 2, **dadurch gekennzeichnet, dass** der Sitz (12, 112) nach vorne abfallend geneigt gelagert ist.

4. Rodel nach Anspruch 2, **dadurch gekennzeichnet, dass** die Längsholme (24, 24', 124,124') nach vorne abfallend geneigt sind.

5. Rodel nach einem der vorhergehenden Ansprüche mit einer Querstrebe (18, 118) in Fahrtrichtung vor dem Sitz und einer oder zwei Querstreben (20, 22, 120, 122) in Fahrtrichtung hinter dem Sitz (12, 112).

6. Rodel nach einem der vorhergehenden Ansprüche, **dadurch gekennzeichnet, dass** Verstrebungen so an den gekrümmten Bereichen (10a, 10c, 110a, 110c) der Träger (10, 100) angreifen, dass bei Belastung des Sitzes (12, 112) zumindest ein Krümmungsradius zumindest eines dieser Bereiche kleiner wird.

7. Rodel nach einem der vorhergehenden Ansprüche mit Bremsbacken am hinteren gekrümmten Bereich (10c, 110c) der Träger.

8. Rodel nach einem der vorhergehenden Ansprüche, **dadurch gekennzeichnet, dass** durch Belastung des Sitzes (12) die Kontaktfläche zwischen den langgestreckten mittleren Bereichen (10b, 10b', 110b, 110b') der Träger und der Rodelbahnoberfläche verkürzbar ist.

9. Rodel nach Anspruch 1, wobei die Verstrebungen (124, 124') sich von den vorderen ersten gekrümmten Bereichen (110a, 110a') zu den hinteren gekrümmten Bereichen (110c, 110c') erstrecken.

10. Rodel nach einem der vorhergehenden Ansprüche, **dadurch gekennzeichnet, dass** die Verstrebungen (24, 24', 124, 124') um einen Winkel gegen die im Wesentlichen geradlinigen mittleren Bereiche (10b, 100b) geneigt sind, der zwischen 5 und 15° beträgt, vorzugsweise zwischen 8 und 12°.

11. Rodel nach einem der vorhergehenden Ansprüche, **dadurch gekennzeichnet, dass** die Verstrebungen (124, 124') in ihrer Länge verstellbar sind.

12. Rodel nach Anspruch 11, **dadurch gekennzeichnet, dass** jede der Verstrebungen (124, 124') über Drehgewinde (130, 130') und/oder Kniehebel in ihrer Länge verstellbar ist.

## Claims

1. Sled including two runners (10; 110, 110') with sliding or rolling means comprising in the direction of travel a first curved portion (10a, 110a) at the front end and a second curved portion (10c, 110c) at the rear end and an elongated middle portion (10b, 110b) therebetween, and with a seat (12,112) being supported by brace bars, the brace bars (24, 24', 124,124') engaging the curved portions of the runners at the front and the rear, **characterized in that** the seat (12) is slidably supported in the longitudinal direction of the sled.

2. Sled according to claim 1 **characterized in that** the seat is slidably supported by brace bars in the form of longitudinal rods (24, 24', 124, 124') extending in the longitudinal direction on both sides of the sled.

3. Sled according to any of claims 1 or 2 **characterized in that** the seat (12, 112) is supported downwardly slanted in the forward direction.

4. Sled according to claim 2 **characterized in that** longitudinal rods (24, 24', 124, 124') are downwardly slanted in the forward direction.

5. Sled according to any of the preceding claims comprising one cross bar (18, 118) in the direction of travel in front of the seat and one or two cross bars (20, 22, 120, 122) in the direction of travel behind the seat (12, 112).

6. Sled according to any of the preceding claims **characterized in that** the brace bars engage the curved portions (10a, 10c, 110a, 110c) of the runners (10, 110) in such a way that when the seat (12, 112) is loaded at least one radius of curvature of at least one of these portions gets smaller.

7. Sled according to any of the preceding claims comprising braking shoes at the rear portions (10c, 110c) of the runners.

8. Sled according to any of the preceding claims **characterized in that** when the seat (12) is loaded the contact area of the elongated middle portions (10b, 10b', 110b, 110b') of the runners and the surface of the sled run may be shortened.

9. Sled according to claim 1 wherein the brace bars (124, 124') extend from the front curved portions (110a, 110a') to the rear curved portions (110c, 110c').

10. Sled according to any of the preceding claims **characterized in that** the brace bars (24, 24', 124, 124') are slanted by an angle against the substantially straight-lined middle portions (10b, 110b), the angle being chosen between 5° and 15°, preferably between 8° and 12°.

11. Sled according to any of the preceding claims **characterized in that** the brace bars (124, 124') are adjustable in their lengths.

12. Sled according to claim 11 **characterized in that** each of the brace bars (124, 124') is adjustable in its length by rotational threads (130,130') and/or toggle levers.

## Revendications

1. Luge comprenant deux supports (10 ; 110, 110'), qui présentent des moyens de glissement ou de roulement et comportent une première zone recourbée (10a, 110a) située à l'avant dans le sens de glisse, une deuxième zone recourbée (10c, 110c) située à l'arrière dans le sens de glisse et, entre lesdites zones, une zone médiane allongée (10b, 110b), et munie d'un siège (12, 112) supporté par des entretoises au-dessus de la zone médiane (10b, 110b) des supports, lesdites entretoises (24, 24', 124,124') agissant à l'avant et à l'arrière sur les zones recourbées des supports, **caractérisée en ce que** le siège (12) est logé déplaçable dans le sens longitudinal de la luge.

2. Luge selon la revendication 1, **caractérisée en ce que** le siège est logé déplaçable sur les entretoises se présentant sous forme de longerons (24, 24', 124,124') qui s'étendent des deux côtés de la luge dans le sens longitudinal de celle-ci.

3. Luge selon la revendication 1 ou 2, **caractérisée en ce que** le siège (12, 112) est logé incliné et penché vers l'avant.

4. Luge selon la revendication 2, **caractérisée en ce que** les longerons (24, 24', 124, 124') sont inclinés et penchés vers l'avant.

5. Luge selon l'une des revendications précédentes, comprenant une traverse (18, 118) située devant le siège dans le sens de glisse et une ou deux traverses (20, 22, 120, 122) situées derrière le siège (12, 112).

6. Luge selon l'une des revendications précédentes, **caractérisée en ce que** les entretoises agissent de telle manière sur les zones recourbées (10a, 10c, 110a, 110c) des supports (10, 100) qu'au moins un rayon de courbure d'au moins une desdites zones est plus petit lorsque le siège (12, 112) est sous contrainte.

7. Luge selon l'une des revendications précédentes, équipée de mâchoires de frein dans la zone arrière recourbée (10c, 110c) des supports.

8. Luge selon l'une des revendications précédentes, **caractérisée en ce que** la surface de contact entre les zones médianes allongées (10b, 10b', 110b, 110b') des supports et la surface de la piste de luge peut être réduite par la mise sous contrainte du siège (12).

9. Luge selon la revendication 1, les entretoises (124,124') s'étendent depuis les premières zones avant recourbées (110a, 110a') jusqu'aux zones arrière recourbées (110c, 110c').

10. Luge selon l'une des revendications précédentes, **caractérisée en ce que** les entretoises (24, 24', 124, 124') sont inclinées vers les zones médianes (10b, 100b) pour l'essentiel rectilignes selon un angle compris entre 5 et 15°, de préférence entre 8 et 12°.

11. Luge selon l'une des revendications précédentes, **caractérisée en ce que** les entretoises (124,124') sont réglables en longueur.

12. Luge selon la revendication 11, **caractérisée en ce que** chacune des entretoises (124, 124'9 est réglable en longueur par le biais de filets rotatifs (130,130') et/ou de leviers à grenouillère.
